# EUROPÄISCHE PATENTSCHRIFT

(11) **EP 0 946 655 B1**
(45) Veröffentlichungstag und Bekanntmachung des Hinweises auf die Patenterteilung: **28.09.2005**
(21) Anmeldenummer: 97954924.3
(22) Anmeldetag: 18.12.1997
(51) Int. Cl.: C09D 5/03, C09D 5/02, C08J 3/03

(54) **WÄSSRIGE PULVERLACK-DISPERSION**
AQUEOUS POWDER-PAINT DISPERSION
DISPERSION DE PEINTURE EN POUDRE AQUEUSE

(30) Priorität: 18.12.1996 DE 19652813
(43) Veröffentlichungstag der Anmeldung: 06.10.1999
(73) Patentinhaber: BASF Coatings AG, 48165 Münster (DE)
(72) Erfinder: KALCK, Ulrich, 48167 Münster (DE); WOLTERING, Joachim, 48159 Münster (DE); BENDIX, Maximilian, 59302 Oelde (DE); SCHUCHMANN, Heike, 1436 Treycovagnes (CH); BORHO, Klaus, 67112 Mutterstadt (DE); WEINLE, Werner, 67159 Friedelsheim (DE); SCHIESSL, Michael, 67454 Hasslach (DE); RÜCK, Sven, 67549 Worms (DE); ANTONIETTI, Markus, 14558 Berholz-Rehbrücke (DE)
(74) Vertreter: Fitzner, Uwe
(86) Internationale Anmeldenummer: PCT/EP1997/007109
(87) Internationale Veröffentlichungsnummer: WO 1998/027141

(56) Entgegenhaltungen:
- EP-A- 0 153 679
- WO-A-95/28448
- WO-A-96/32452
- DE-A- 2 903 022
- FR-A- 2 007 192
- FR-A- 2 230 699
- US-A- 5 379 947

## Beschreibung

Die vorliegende Erfindung betrifft eine wäßrige Pulverlack-Dispersion, die sich insbesondere als Überzug für mit Wasserbasislack beschichtete Automobilkarosserien eignet.

Für die Beschichtung von Automobilkarosserien werden heute vorzugsweise Flüssiglacke verwendet. Diese verursachen zahlreiche Umweltprobleme aufgrund ihres Lösemittelgehaltes. Dies gilt auch für die Fälle des Einsatzes von Wasserlacken.

Völlig lösemittelfreie Dispersionsfarben werden bislang nur in Anwendungsbereichen (z.B. als Wandfarben im Bautenschutz) eingesetzt, die relativ geringe Anforderungen an die resultierenden Oberflächeneigenschaften stellen. Dort, wo die Beschichtung höchsten optischen und mechanischen Anforderungen genügen muß, z.B. bei Coil-Coating oder Automobil-Decklackierungen, ist ein vollständiger Verzicht auf organische Lösemittel zur Zeit nicht möglich. So weisen viele Wasserlacke einen Restgehalt an organischen Lösemitteln im Bereich von 10 bis 20 % auf und sind somit eher als lösemittelreduzierte Lacksysteme zu bezeichnen.

Aus diesem Grund sind in den letzten Jahren vermehrte Anstrengungen unternommen worden, für die Beschichtung Pulverlacke zu verwenden. Die Ergebnisse sind jedoch bisher nicht zufriedenstellend, insbesondere sind zur Erzielung eines gleichmäßigen Aussehens erhöhte Schichtdicken erforderlich. Desweiteren sind die Lackfilme auf Pulverbasis im Bezug auf ihre optischen Eigenschaften wie Verlauf und Glanz und den mechanisch-technologischen Eigenschaften wie Chemikalien-, Wetter- und Wassertropfenbeständigkcit noch nicht optimal. Darüber hinaus zeigen die für die Linienbedingungcn von Pulverlacklackierungen im Automobilbereich geeigneten Vernetzungsreaktionen teilweise Schwächen bei der Chemikalien- und Kratzfestigkeit.

Auf der anderen Seite bedingt der Einsatz von pulverförmigen Lacken eine andere Applikationstechnologie, so daß für diese eine spezielle Lackierausrüstung benötigt wird. Dadurch wird die Integration der Pulverlacktechnologie in bereits bestehende Lackierstraßen oft wirtschaftlich unrentabel und somit die Umstellung auf lösemittelfreie Lacksysteme bis zur Neuinstallation der gesamten Lackieranlage verzögert. Zur Zeit sind aufgrund der relativ großen Partikelgröße von ca. 25 µm bei Anwendung der Pulverlacktechnologie kaum Lackfilme zu erzeugen, die eine Schichtdicke von weniger als 50 µm aufweisen.

Die für Flüssiglacke ausgelegten Anlagen können für Pulverlacke nicht verwendet werden. Andererseits haben Flüssiglacke die o.g. Nachteile. Insbesondere stellen die umweltfreundlicheren, wässrigen Lacksysteme lediglich einen Kompromiß aus Lösemittelgehalt und Beschichtungsqualität dar. Eine Verbesserung der Filmeigenschaften läßt sich in vielen Fällen nur auf Kosten eines höheren Lösemittelgehaltes realisieren. Daher ist man bestrebt, Pulverlacke in Form wäßriger Dispersionen zu entwickeln, die sich mit Flüssiglacktechnologien verarbeiten lassen(US-PS 3 737 401, US-PS 3 787 230, DE-AS 2 601 618, DE-OS 2 140 843, DE 2 716 118, US-PS 4 477 530, US-PS 4 686 249 BASF F+F AG (1 987), US-PS 4 510 275, US-PS 4 122 055, US-PS 4 385 138, WO 96/37561).

Bei diesen sogenannten Powder-Slurries handelt es sich um stabile wäßrige Dispersionen von Pulverlacken. Die ersten Powder-Slurries wurden durch Suspendieren von Pulverlacken in Wasser hergestellt. Die Partikelgröße der Pulverlackharzpartikel betrug hierbei 0.5-80 µm. Es konnten Lackformulierungen mit einem Feststoffgehalt im Bereich von 20-70 % realisiert werden. Im Gegensatz zu Wasserlacken ist bei Powder-Slurries ein Zusatz organischer Lösemittel als Verlaufsmittel nicht erforderlich, da sich die Lackpartikel nach der Applikation des Lackes durch die wäßrige Phase gut entspannen können. Dies ist möglich, da zu diesem Zeitpunkt die Harzpartikel in einem relativ niedrigviskosen Medium vorliegen und so über eine ausreichende Mobilität verfügen. Beim sich anschließenden Einbrennprozeß reagieren die Bindemittel und Vemetzerpartikel miteinander, so daß diese Mobilität mit zunehmendem Netzwerkaufbau verloren geht. Nach der Vortrocknung einer Powder-Slurry kann diese vereinfacht wie ein Pulverlack betrachtet werden. Hinsichtlich der Partikelgröße der Harze unterscheiden sich die Systeme jedoch deutlich voneinander, was sich bei der Applikation von Powder-Slurries in einer geringeren Schichtdicke (20-45 µm) des eingebrannten Lackes widerspiegelt. Der Vorteil von Pulverlacken, nämlich die zeitliche Trennung vom Schmelzen der Harzpartikel zu einem glatten Film und die nachfolgende Reaktion zu einem geschlossenem Netzwerk findet sich somit auch in Powder-Slurry Systemen wieder.

Powder-Slurries und deren Herstellung sind Gegenstand zahlreicher Veröffentlichungen und Patentanmeldungen. So wird in der DE-OS-2 140 843 die Herstellung eines Pulverlackes durch Einspritzen bzw. Eindüsen einer Lack farbe in Wasser, Abtrennen und Trocknung des gefällten Pulvers, beschrieben. Alternativ zu diesem Herstellungsverfahren wurde versucht, Pulverlacke durch mechanische Vorzerkleinerung gefolgt von einer Feinnaßmahlung in Wasser in Powder-Slurries zu überführen.

Aus der US-Patentschrift 4268542 ist ferner ein Verfahren bekannt, bei dem eine Pulverlack-Slurry verwendet wird, die sich für die Beschichtung von Automobilen eignet. Hierbei wird zunächst eine herkömmliche Pulverschicht auf die Karosserie aufgetragen und als zweite Schicht die Klarlack-Slurry. Bei dieser Klarlack-Slurry muß mit hohen Einbrenntemperaturen (über 160° C) gearbeitet werden.

In der US-PS 5379947 wird ein Powder-Slurry System für die Beschichtung von Automobilen beschrieben, das auf einem hydroxyfunktionellen Bindemittel und einem epsilon-Caprolactam-blockiertem IsophorondiisocyanatVernetzer basiert. Nach erfolgter pneumatisch-elektrostatischer Applikation der Powder-Slurry wird diese zunächst 10 Minuten bei 49°C vorgetrocknet und dann 30 Minuten bei 177°C eingebrannt.

Bei Automobilerstlackierungen werden höhere Einbrenntemperaturen als 150°C aus wirtschaftlichen Gründen und wegen der Farbstabilität der Basislacke bisher nicht in der Praxis eingesetzt. Zudem ist die Feinheit der Pulverteilchen nicht zufriedenstellend.

Die in den o.g. Patenten zur Powder-Slurry beschriebenen Herstellungsverfahren gehen von der Mikronisierung von Festharzen aus. Diese werden zunächst in einem Feststoffmischer vorgemischt, dann im Extruder homogenisiert, mit einer Mühle pulverisiert und abschließend in Wasser unter Zusatz verschiedener Additive wie Netz- und Dispergiermittel in Rührwerksmühlen auf die endgültige Partikelgröße im Bereich von 3-20 µm naßvermahlen.

Dieses Verfahren ist nicht nur sehr aufwendig und störanfällig, sondern führt auch zu Restriktionen, die schon bei der Bindemittel- und Vernetzersynthese berücksichtigt werden müssen. So darf die Glasübergangstemperatur der Festharze einen bestimmten Wert nicht unterschreiten, damit eine ausreichende Blockfestigkeit, die eine der Voraussetzungen für die Mikronisierung und problemlose Lagerung der pulverisierten Harze ist, gewährleistet ist. Der obere Grenzwert der Glasübergangstemperatur ist festgelegt durch die Forderung nach einem sehr guten. Verlauf bei niedrigen Einbrenntemperaturen, also hoher Reaktivität der Bindemittel-Vernetzer-Kombination.

Aus der WO 96/32452 ist ein Verfahren bekannt, bei dem feste Pulverteilchen in Wasser dispergiert werden.

Aus der FR 2.230.699 ist es bekannt wäßrige Dispersionen eines Bindemittels und ggf. Vernetzers, welche durch Erhitzen verflüssigt wurden, in Wasser vorzuemulgieren. Dort wird eine normale Voremulgierung beschrieben, die keinen besonderen Zeitrahmen vorgibt.

Die vorliegende Erfindung hat sich nunmehr die Aufgabe gestellt, ein Verfahren zur Herstellung einer wäßrigen Pulverlack-Dispersion die sich mit der bisherigen Flüssiglacktechnologie auf Automobilkarosserien auftragen läßt und insbesondere bereits bei Temperaturen von weniger als 150°C einbrennbar ist.

Diese Aufgabe wird dadurch gelöst, daß eine flüssige Schmelze enthaltend Bindemittel und Vernetzungsmittel, sowie gegebenenfalls Katalysatoren, Hilfsstoffen und weiteren Additiven wie Entgasungsmittel, UV-Absorbern, Radikalfängern und/oder Antioxidantien gemischt, in eine Emulgiervorrichtung vorzugsweise unter Zusatz von Wasser und Stabilisatoren gegeben, die erhaltene Emulsion abgekühlt und filtriert wird, wobei die Verweilzeit vom Beginn der Misch- bis zum Ende der Abkühlphase bei weniger als 5 sec. liegt und wobei die Bindemittel- und Vernetzerschmelze erst unmittelbar vor der Mischzone zusammengeführt werden.

Um eine hohe Mischgüte erzielen zu können, ist es erfindungswesentlich, im Gegensatz zum Stand der Technik die Mischung lösemittelfrei in der Schmelze durchzuführen. Demgemäß werden die polymeren Komponenten als viskose Harzschmelzen in die Dispergieraggregate eingespeist.
Dazu müssen Bindemittel und Vernetzer aufgeschmolzen werden. Das Verhältnis von Vernetzern zu Bindemitteln beträgt 0,6 bis 1:1,4, bevorzugt 0,8:1 bis 1:1,2., Vorzugsweise werden Vernetzer und Bindmittel in getrennten Behältern erhitzt. Die Temperatur wird dabei so ausgewählt, daß beide Komponenten aufgeschmolzen sind und deren Viskosität eine weitere Verarbeitung, insbesondere Förderung erlaubt. Je höher die Temperatur der Schmelze, desto geringer die Viskosität, und desto bessere Mischgüten sind erzielbar. Allerdings muß weitgehend eine Vernetzungsreaktion ausgeschlossen werden. Die Vernetzungsreaktion läuft bei höheren Temperaturen deutlich schneller ab. Daher besteht nur ein enges Temperatur-Zeit-Fenster, in dem die zur Verfügung stehende Verweilzeit bis zum Abkühlen ausreichend lang ist, und gleichzeitig eine gute Emulgierung möglich ist. Um dieses möglichst effizient zu nutzen, werden die Bindemittel- und Vernetzerschmelze erst unmittelbar vor der Mischzone zusammengeführt.

Vor der Förderung der Komponenten durch die Anlage kann diese vorzugsweise mit Dampf auf die gewünschte Prozeßtemperatur erwärmt werden. Anschließend werden die geschmolzene Bindemittel-Additiv-Mischung und die Vernetzersschmelze in vorzugsweise getrennten, beheizten Zuleitungen mit Pumpen durch die gesamte Anlage befördert und in einen Mischer dosiert. Über den Volumenstrom der Förderpumpen läßt sich ein stöchiometrisches Verhältnis von Bindemitteln/Additivmischung und Vernetzerschmelze einstellen. Vorzugsweise beträgt das Verhälnis der OH-Gruppen des Acrylates zu latenten NCO-Grupppen des Härters 0,6:1 bis 1:1,4, besonders bevorzugt von 0,8:1 bis 1:1,2.

Die flüssige Mischung wird anschließend sofort in Wasser emulgiert. Hierbei wird der organischen Phase und/oder dem Wasser ein Emulgator zugesetzt. Im Falle des Einsatzes eine wäßrigen Emulgator/Stabilisator-Lösung wird unter Druck auf eine Temperatur in der Nähe der Mischungstemperatur erwärmt und darin die flüssige Bindemittel-Vernetzer-Mischung emulgiert.

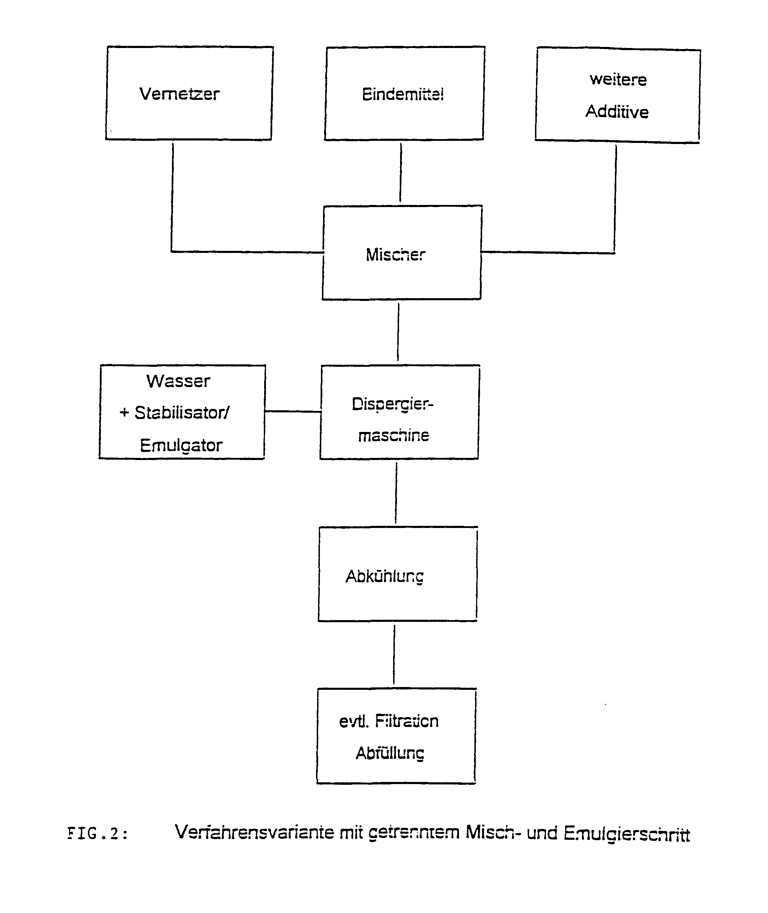

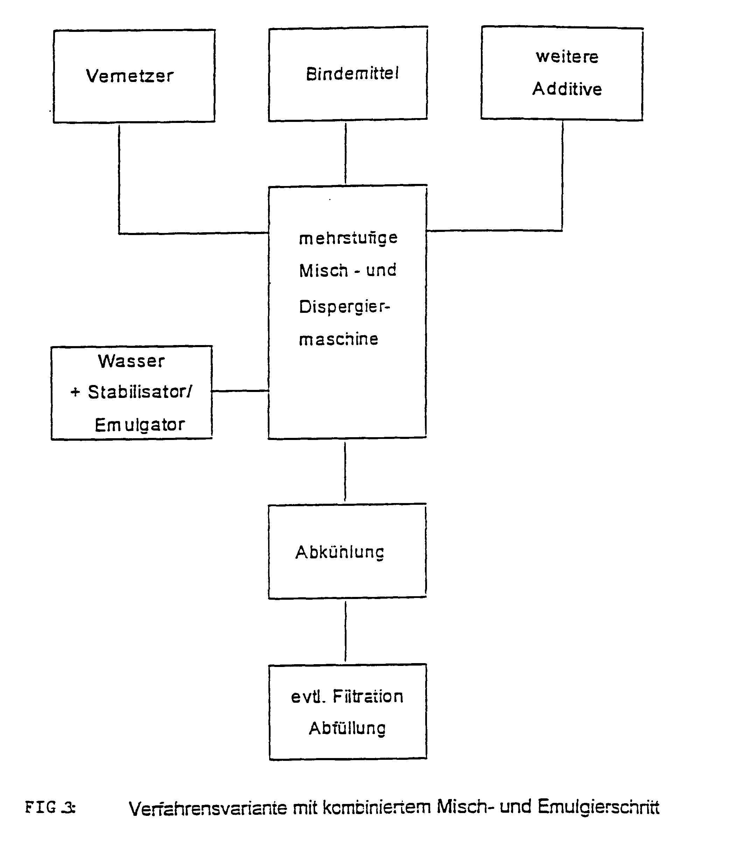

Mischen und Emulgieren kann in zwei getrennten (Fig. 2) oder in einer (Fig.3), mehrstufigen, Maschine realisiert werden. Die zweite Lösung hat aus Vernetzungsgründen deutliche Vorteile, da hier die Verweilzeit bei den hohen Temperaturen minimiert wird. Ggf. vorhandenes organisches Lösemittel kann nachfolgend direkt durch Vakuumdestillation bei niedrigen Temperaturen von der wäßrigen Phase abgetrennt werden.

Im Anschluß an die Emulgierung wird sofort eine Abkühlung durchgeführt. Dies muß so realisiert werden, daß zum einen kein Verkleben der dispersen Harzpartikein auftritt, zum anderen die Verweilzeit bis zu dem Zeitpunkt, an dem keine Vernetzungsreaktion mehr stattfinden kann, möglichst kurz ist. Dieses Ziel kann z. B. durch Einsatz eines Wärmetauschers, Abkühlen durch Einspritzen von kaltem Wasser oder durch Verdüsen der Emulsion in kaltes Wasser erreicht werden.

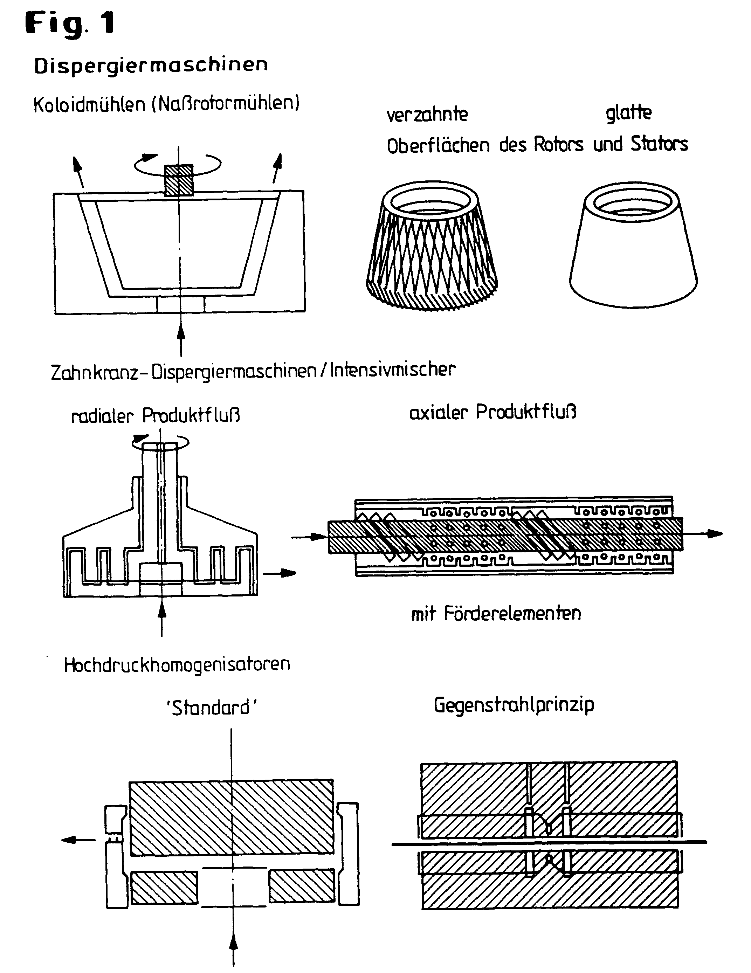

Um Vernetzungsreaktionen während der Misch-, Emulgier- und Abkühlphase auszuschließen, muß die Verweilzeit vom Beginn der Misch- bis zum Ende der Abkühlphase möglichst kurz gehalten werden. Diese liegt bei weniger als 5 s, vorzugsweise weniger als 1 s. Daher werden kontinuierliche Verfahren bevorzugt. Hierfür werden Maschinen wie Rotor-Stator-Dispergierapparate (Zahnkolloid- oder Naßrotormühlen, Zahnkranz-Dispergiermaschinen, Intensivmischer) sowie statische Mischer (Fig. 1) eingesetzt.

Diese Maschinen können in den in Figur 2 und 3 gezeigten Verschaltungen eingesetzt werden. In Fig. 2 wird der Misch- und der Zerkleinerungsschritt in zwei unterschiedlichen Maschinen vorgenommen. Zum Mischen kommen auch hier Rotor-Stator-Aggregate, sowie vorzugsweise statische Mischer, zum Einsatz, wobei durch Wahl der Verfahrensparameter eine ausreichende Mischintensität bei gleichzeitig möglichst geringer Energiezufuhr bzw. Erwärmung, d.h. Wärmezufuhr erreicht wird. Zum anschließenden Emulgieren in Wasser kann die Bindemittel-Vernetzer-Mischung in Wasser verdüst werden. Werden ausreichende Feinheiten nicht erreicht, können wiederum Rotor-Stator-Aggregate oder statische Mischer eingesetzt werden. Eine weitere Steigerung des lokalen Leistungseintrages ist durch den oben beschriebenen Einsatz eines Hochdruckhomogenisators möglich. Hierbei wird die Emulsion bei Drücken im Bereich von 100-1500 bar, vorzugsweise 100 bis 1000 bar, besonders 100 bis 200 bar, durch feine Öffnungen gepreßt, was zu einer deutlichen Verringerung der Tröpfchengröße und somit zu einer größeren Stabilität der Emulsion während der Lagerung führt.

Die vorgestellten Mikronisierungsvarianten führen zu lösemittelfreien Dispersionen mit den mittleren Partikelgrößen im Bereich von 100 - 10000, vorzugsweise 150 bis 6000, besonders bevorzugt 400 bis 4000, höchst bevorzugt 600-3500 nm und sind somit erheblich feinteiliger als die durch Naßmahlung von Pulverlacken nach dem Stand der Technik herstellbaren wäßrigen Dispersionen (Partikelgröße 3-20 µm).

Mittels der Emulsionspolymerisation nach dem Stand der Technik lassen sich zwar feinteilige Polymerdispersionen herstellen, diese weisen jedoch in de Regel sehr hohe Molekulargewichte (>100.000 g/mol) auf. Ein hohes Molekulargewichte führt jedoch zu einer geringeren Diffusionsgeschwindigkeit der Polymerteilchen während der Einbrennphase, wodurch wiederum Verlaufsstörunger im Lackfilm resultieren können. Erfindungsgemäß liegen jedoch die Molekulargewichte von 1000 bis 20000, bevorzugt 1000 bis 10000, besonders bevorzugt 1500 his 6000, höchst vorzugsweise 1500 bis 4000 g/mol, so daß der aufgezeigte Nachteil der geringeren Diffusionsgeschwindigkeit nicht auftritt.

Für die erfindungsgemäßen Pulverlackdispersion kommen nach dem Stand der Technik an sich bekannte Bindemittel in Betracht, z.B. Polyacrylate, Polyurethane, Aminoplastharze.

Ebenso können epoxidhaltige Bindemittel verwendet werden. Erfindungsgemäß kann demgemäß auch eine wäßrige Pulverlackdispersion zum Einsatz kommen, die aus einer festen, pulverförmigen Komponente A und einer wäßrigen Komponente B besteht, wobei
Komponente A. ein Pulverlack ist enthaltend
a) wenigstens ein epoxidhaltiges Bindemittel mit einem Gehalt von 30 bis 45 %, vorzugsweise 30 bis 35 % an glycidylhaltigen Monomeren ggf. mit einem Gehalt an vinylaromatischen Verbindungen, vorzugsweise Styrol,
b) wenigstens ein Vernetzungsmittel, vorzugsweise geradkettige, aliphatische Dicarbonsäuren und/oder carboxyfunktionelle Polyester und
c) ggf. Katalysatoren, Hilfsstoffe, pulverlacktypische Additive, wie Entgasungsmittel, Verlaufsmittel, UV-Absorber, Radikalfänger, Antioxidantien
und
Komponente B. eine wäßrige Dispersion ist enthaltend
a) wenigstens einen nicht-ionischen Verdicker und
b) ggf. Katalysatoren, Hilfsstoffe, Entschäumungsmittel, Dispersionshilfsmittel, Netzmittel, vorzugsweise carboxyfunktionelle Dispergiermittel, Antioxydantien, UV-Absorber, Radikalfänger, geringe Mengen Lösemittel, Verlaufsmittel, Biozide und/oder Wasserrückhaltemittel.

Derart zusammengesetzte Dispersionen finden insbesondere für Pulverklarlacke Verwendung.

Als epoxifunktionelles Bindemittel für den festen Pulverlack, der zur Herstellung der Dispersion verwendet wird, sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B.bekannt aus EP-A-299420, DE-B-22 14 650, DE-B-27 49 576, US-A-4,091,048 und US-A-3,781,379).

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten sind, Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht (gelpermeationschromatographisch unter Verwendung eines Polystyrolstandards bestimmt) von 2.000 bis 20.000, vorzugsweise von 3.000 bis 10.000, und eine Glasübergangstemperatur (T_{G}) von 30 bis 80, vorzugsweise von 40 bis 70, besonders bevorzugt von 40 bis 60°C auf (gemessen mit Hilfe der Differential Scanning Calorimetrie (DSC)). Ganz besonders bevorzugt werden ca. 50°C. Zum Einsatz können auch Gemische aus zwei oder mehr Acrylatharzen kommen.

Das epoxidgruppenhaltige Polyacrylatharz kann nach allgemein gut bekannten Methoden durch Polymerisation hergestellt werden.

Als Vernetzer kommen alle aus dem Stand der Technik dem Fachmann bekannten Verbindungen in Betracht. Hierzu zählen z.B. Carbonsäuren, insbesondere gesättigte, geradkettige, aliphatische Dicarbonsäuren mit 3 bis 20 C-Atomen im Molekül geeignet, z.B. Decan-1,12-disäure. Zur Modifizierung der Eigenschaften der fertigen Pulverklarlacke können ggf. noch andere Carboxylgruppen enthaltende Vernetzer eingesetzt werden. Als Beispiele hierfür seien gesättigte verzweigte oder ungesättigte geradkettige Di- und Polycarbonsäuren sowie Polymere mit Carboxylgruppen genannt.

Ferner sind auch Pulverlacke geeignet, die einen epoxifunktionellen Vernetzer und ein säurefunktionelles Bindemittel enthalten.

Als säurefunktionelles Bindemittel sind beispielsweise saure Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Das epoxidgruppenhaltige Bindemittel bzw. der epoxidgruppenhaltige Vernetzer und das Carboxyl- bzw. das Bindemittel werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOII-Lösung ermittelt werden.

Erfindungsgemäß kann das Bindemittel vinylaromatische Verbindungen enthalten, insbesondere Styrol. Um die Gefahr der Rißbildung zu begrenzen, liegt der Gehalt jedoch nicht über 35 Gew.-%. Bevorzugt werden 10 bis 25 Gew.-%.

Die festen Pulverlacke enthalten ggf. einen oder mehrere geeignete Katalysatoren für die Aushärtung. Geeignete Katalysatoren sind Phosphoniumsalze organischer oder anorganischer Säuren, quarternäre Ammoniumverbindungen Amine, Imidazol und Imidazolderivate. Die Katalysatoren werden im allgemeinen in Anteilen von 0,001 Gew.-% bis etwa 2 Gew.-%, bezogen auf das Gesamtgewicht des Epoxidharzes und des Vernetzungsmittels, eingesetzt.

Beispiele für geeignete Phosphonium-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium Katalysatoren sind z.B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Außerdem können die festen Pulverlacke ggf. noch Hilfsmittel und Additive enthalten. Beispiele hierfür sind Verlaufsmittel, Antioxidantien, UV-Absorber, Radikalfänger, Rieselhilfen und Entgasungsmittel, wie beispielsweise Benzoin.

Geeignet sind Verlaufsmittel auf der Basis von Polyacrylaten, Polysiloxanen bzw. Fluorverbindungen.

Einsetzbare Antioxidantien sind Reduktionsmittel wie Hydrazide und Phosphorverbindungen sowie Radikalfänger z.B. 2,6 Di-tert-Butylphenol.

Verwendbare UV-Absorber sind bevorzugt Triazine und Benztriphenol.

Als Radikalfänger sind 2,2,6,6 Tetramethylpiperidindervate einsetzbar.

Als weiteren Bestandteil enthält die wäßrige Komponente B der Pulverlackdispersion wenigstens einen nicht-ionischen oder ionischen Verdicker a). Bevorzugt werden nicht-ionische Assoziativ-Verdicker a) eingesetzt. Strukturmerkmale solcher Assoziativ-Verdicker a) sind:
aa) ein hydrophiles Gerüst, das eine ausreichende Wasserlöslichkeit sicherstellt und
ab) hydrophobe Gruppen, die zu einer assoziativen Wechselwirkung im wäßrigen Medium fähig sind.

Als hydrophobe Gruppen werden beispielsweise langkettige Alkylreste, wie z.B. Dodecyl-, Hexadecyl- oder Octadecyl-Reste, oder Alkarylreste, wie z.B. Octylphenyl- oder Nonylphenyl-Reste eingesetzt.
Als hydrophile Gerüste werden vorzugsweise Polyacrylate, Celluloseether oder besonders bevorzugt Polyurethane eingesetzt, die die hydrophoben Gruppen als Polymerbausteine enthalten.

Ganz besonders bevorzugt sind als hydrophile Gerüste Polyurethane, die Polyetherketten als Bausteine enthalten, vorzugsweise aus Polyethylenoxid.

Bei der Synthese solcher Polyetherpolyurethane dienen die Di- und oder Polyisocyanate, bevorzugt aliphatische Diisocyanate, besonders bevorzugt ggf. alkylsubstituiertes 1,6-Hexamethylendiisocyanat, zur Verknüpfung der Hydroxylgruppen-terminierten Polyetherbausteine untereineinander und zur Verknüpfung der Polyetherbausteine mit den hydrophoben Endgruppenbausteinen, die beispielsweise monofunktionelle Alkohole und/oder Amine mit den schon genannten langkettigen Alkylresten oder Aralkylresten sein können.

Weiterhin kann die Komponente B Katalysatoren, Verlaufsmittel, Antioxidantien, UV-Absorber, Radikalfänger und Netzmittel enthalten. Im wesentlichen kommen hier die bereits für die Komponente A aufgezählten Stoffe in Betracht.

Ferner können der Komponente B Hilfsstoffe, Entschäumungsmittel, Dispersionshilfsmittel, Biozide, Lösungs- und Neutralisationsmittel zugesetzt sein.

Als Entschäumungsmittel kommen bevorzugt modifzierte Polysiloxane in Betracht.

Dispersionshilfsmittel sind z.B. bevorzugt Ammonium bzw. Metallsalze von Polycarboxylaten.

Verwendbare Neutralisationsmittel sind Amine, Ammoniak und Metallhydroxide. Erfindungsgemäß weiterhin bevorzugte Bindemittel sind hydroxyfunktionalisierte Verbindungen, insbesondere hydroxylgruppenhaltige Acrylate. Besonders bevorzugt sind hydroxyfunktionalisierte Polymethacrylate.
Erfindungsgemäß weiterhin bevorzugte Bindemittel sind hydroxyfunktionalisierte Verbindungen, insbesondere hydroxylgruppenhaltige Acrylate. Besonders bevorzugt sind hydroxyfunktionalisierte Polymethacrylate. Beispielhaft für eine solche Polyhydrxy-funktionellen Polyacrylate (Polyacrylatpolyole) seien solche genannt, die als Comonomereinheiten vorzugsweise Hydroxyalkylester der Acrylsäure, Methacrylsäure oder einer anderen alpha, beta-ethylenisch ungesättigten Carbonsäure enthalten. Diese Ester können sich von einem Alkylenglykol ableiten, das mit einer Säure verestert ist, oder sie können durch Umsetzung der Säure mit einem Alkylenoxid erhalten werden.
Als Hydroxylalkylester werden vorzugsweise Hydroxylalkylesterr der (Meth)acrylsäure, in denen die Hydroxylalkylgruppe bis zu 4 Kohlenstoffatome enthält, oder Mischungen aus diesen Hydroxyalkylesetern eingesetzt.
Beispielhaft seien genannt: 2-Hydroxyethyl(meth)-acrylat, 2- oder 3-Hydroxypropyl-(meth)acrylat oder 4-Hydroxbutyl(meth)acrylat.

Als Vernetzer kommen in diesem Fall vorzugsweise blockierte Isocyanate in Betracht. Durch gezielte Kombination verschiedener Polyisocyanatpräpolymeren mit unterschiedlichen Blockierungsmitteln wird die Reaktivität des Vernetzers gegenüber aktiven Wasserstoff enthaltenden polymeren Bindemitteln so eingestellt werden, daß die Temperaturdifferenz zwischen Filmbildung und Vernetzung ausreichend groß ist.

Zur Stabilisierung können die o.g. Dispergierhilfsmittel oder Emulgatoren zur Anwendung kommen. Daneben können auch andere Stoffe verwendet werden.

Das Bindemittel und auch der Vernetzer dürfen, damit sich die Applikations- und Filmeigenschaften der Powder-Slurry auch nach längerer Lagerung des Materials nicht verändern, bei Raumtemperatur weder untereinander noch mit den zugesetzten Additiven oder dem als Lösemittel fungierenden Wasser reagieren.

Die physikalische Stabilität spiegelt sich im Absetz- und Agglomerationsverhalten der Harzpartikel in der wäßrigen Lösung wieder. Die in der Powder-Slurry vorliegenden Feindispersionen aus Lackpulverteilchen beziehungsweise die mikronisierten Reaktivpartner haben die mittlere Partikelgrößen von 100 bis 10000, vorzugsweise 150 bis 6000, besonders bevorzugt 400 bis 4000, höchst bevorzugt 800 bis 3500 nm und Molekulargewichte von 1000 bis 20000, vorzugsweise 1000 bis 10000, besonders bevorzugt 1500 bis 6000, höchst bevorzugt 1500 bis 4000 g/mol, wobei den Feindispersionen ohne entsprechende grenzflächenaktive Substanzen nicht stabil sind und daher ihre Verarbeitungseigenschaft und das Lackierungsverhalten durch Partikelowechselwirkungen verlieren würden.

In jedem Fall müssen Stabilisatoren folgende Eigenschaften aufweisen:
1. Sie sollen sehr effizient sein, d. h. kleine Dosierungen sollen große Mengen an Dispersionsgut stabilisieren helfen.
2. Sie sollen eine Hydrophilie aufweisen, die sich "schalten" läßt, d. h. die wasserliebenden Gruppen sollen im Festkörper durch chemische Reaktionen in hydrophobe Strukturkomponenten umzuwandeln sein.
3. Sie sollten vom chemischen Strukturaufbau mit dem Lackharz verträglich sein, um einer Schädigung des Eigenschaftsprofils durch Entmischung oder unvollständigen Aufbau vorzubeugen.

Erfindungsgemäß kommen Emulgatoren auf Polyurethanbasis hergestellt durch Coaddition hydrophiler und hydrophober Polyalkohole und Polyester mit Diisocyanaten und Aminverlängerung in Betracht, wobei die Stoffzusammensetzung und damit die Amphiphilie, das Molekulargewicht und die Anzahl an funktionellen Gruppen variiert werden. Dabei wird die Amphiphilie auf die spezielle Grenzfläche Lackharz/Wasser derart eingestellt, daß eine effektive und langzeitstabile Dispersion mit minimalen Mengen an Stabilisator vollzogen werden kann. Die verbleibenden funktionellen Gruppen wiederum werden derart gewählt, daß sie bei der Härtung chemisch in den Lackfilm mit einbezogen werden und so den Emulgator "dehydrophilieren".

Alternativ können durch übertragende Polymerisation in lyotroper Phase kurzkettige amphiphile Polyacrylate aus Acrylsäure, Ethylhexylacrylat, Hydroxyethylacrylat und einem anionischen Comonomer hergestellt werden. Neben der Urethanchemie erlauben diese Systeme auch einen "Carboxy-Epoxy"-2 Komponenten Strukturaufbau. Die erfindungsgemäße Pulverlackdispersion läßt sich als pigmentierter Lack oder in Form eines Klarlacks als Überzug von Basislacken, vorzugsweise in der Automobilindustrie, verwenden.

Die erfindungsgemäßen Pulverlackdispersionen lassen sich mit den aus der Flüssiglacktechnologie bekannten Methoden aufbringen. Insbesondere können sie mittels Spritzverfahren aufgebracht werden. Ebenso kommen elektrostatisch unterstützte Hochrotation oder pneumatische Applikation in Betracht.

Die auf die Basislackschicht aufgebrachten Pulverklarlackdispersionen werden regelmäßig vor dem Einbrennen abgelüftet. Dies geschieht zweckmäßigerweise zunächst bei Raumtemperatur und anschließend bei leicht erhöhter Temperatur. In der Regel beträgt die erhöhte Temperatur 40 bis 70°C, vorzugsweise 50 bis 65°C. Das Ablüften wird für 2 bis 10 Minuten, vorzugsweise 4 bis 8 Minuten bei Raumtemperatur durchgeführt. Bei erhöhter Temperatur wird nochmals während derselben Zeitspanne abgelüftet.

Das Einbrennen kann bereits bei Temperaturen von 130°C durchgeführt werden. Durchführbar ist das Einbrennen bei 130 bis 180°C, vorzugsweise 135 bis 155°C.

## Patentansprüche

1. Verfahren zur Herstellung einer wässrigen Pulverlackdispersion, **dadurch gekennzeichnet, daß** eine flüssige Schmelze enthaltend Bindemittel und Vernetzungsmittel in eine Emulgiervorrichtung unter Zusatz von Wasser und Stabilisatoren gegeben, die erhaltene Emulsion abgekühlt und filtriert wird, wobei die Verweilzeit vom Beginn der Misch- bis zum Ende der Abkühlphase bei weniger als 5 sec. liegt und wobei die Bindemittel- und Vernetzerschmelze solchermaßen zusammengeführt werden, daß eine Vernetzungsreaktion ausgeschlossen ist.

2. Verfahren nach Anspruch 1, **dadurch gekennzeichnet, daß** Bindemittel und Additive einerseits sowie Vernetzungsmittel andererseits getrennt aufgeschmolzen, anschließend miteinander gemischt und schließlich die Dispergierung durchgeführt wird.

3. Verfahren nach Anspruch 1 oder 2, **dadurch gekennzeichnet, daß** das Verhältnis des Bindemittels zu dem Vernetzer in der Schmelze 0,6:1 bis 1:1,4 beträgt.

4. Verfahren nach einem der Ansprüche 1 bis 3, **dadurch gekennzeichnet, daß** die Mischung bei Drücken von 100 bis 1500 bar durch feine Öffnungen gepreßt wird.

5. Verfahren nach einem der Ansprüche 1 bis 4, **dadurch gekennzeichnet, daß** die Partikel der Emulsion vor der Abkühlung in einem weiteren Verfahrensschritt zerkleinert werden.

6. Verfahren nach einem der Ansprüche 1 bis 5, **dadurch gekennzeichnet, daß** die Abkühlung mittels Wärmetauscher, Einspritzen von Wasser in die Emulsion oder Verdüsen der Emulsion in Wasser erreicht wird.

7. Verfahren nach einem der Ansprüche 4 oder 5, **dadurch gekennzeichnet, daß** Rotor-Stator-Dispergierapparate, sowie Zahnkolloid- oder Naßrotormühlen, Zahnkranz-Dispergiermaschinen, Intensivmischer, oder Hochdruckhomogenisatoren eingesetzt werden.

8. Verfahren nach einem der Ansprüche 1 - 7, **dadurch gekennzeichnet, daß** als Bindemittel Polyacrylat-, Polyurethanharze und Aminoplastharze sowie Epoxiacrylate zum Einsatz kommen.

9. Wäßrige Pulverlackdispersion, **dadurch gekennzeichnet, daß** sie erhältlich ist in einem Verfahren nach einem der Ansprüche 1-7.

10. Wäßrige Pulverlackdispersion nach Anspruch 9, **dadurch gekennzeichnet, daß** die mittlere Partikelgröße der Pulverlackteilchen im Bereich von 100 bis 10000 nm und das Molekulargewicht zwischen 1000 und 20000 g/mol liegt.

11. Verwendung der wässrigen Pulverlackdispersion nach einem der Ansprüche 9 oder 10 zur Beschichtung von Substraten aus Metall oder Kunststoffen.

## Claims

1. Process for preparing an aqueous powder coating dispersion, **characterized in that** it comprises introducing a liquid melt comprising binders and crosslinking agents into an emulsifying apparatus, with the addition of water and stabilizers, and cooling and filtering the resultant emulsion, the residence time from the start of the mixing phase to the end of the cooling phase being less than 5 seconds and the binder melt and crosslinker melt being brought together in such a way as to rule out a crosslinking reaction.

2. Process according to Claim 1, **characterized in that** binders and additives on the one hand and crosslinking agents on the other hand are melted separately, then mixed with one another, and, finally, dispersion is carried out.

3. Process according to Claim 1 or 2, **characterized in that** the ratio of binder to crosslinker in the melt is from 0.6:1 to 1:1.4.

4. Process according to one of Claims 1 to 3, **characterized in that** the mixture is forced through fine openings at pressures from 100 to 1500 bar.

5. Process according to one of Claims 1 to 4, **characterized in that** the particles of the emulsion are comminuted in a further process step prior to cooling.

6. Process according to one of Claims 1 to 5, **characterized in that** cooling is achieved by means of heat exchangers, injection of water into the emulsion, or spraying of the emulsion into water.

7. Process according to Claim 4 or 5, **characterized in that** rotor-stator dispersing apparatus, and also toothed colloid mills or wet rotor mills, crown gear dispersers, intensive mixers, or high-pressure homogenizers are employed.

8. Process according to one of Claims 1-7, **characterized in that** polyacrylate resins, polyurethane resins and amino resins and also epoxy acrylates are employed as binders.

9. Aqueous powder coating dispersion which is obtainable in a process according to one of Claims 1-7.

10. Aqueous powder coating dispersion according to Claim 9, **characterized in that** the average size of the powder coating particles lies within the range from 100 to 10,000 nm and the molecular weight lies between 1000 and 20,000 g/mol.

11. Use of the aqueous powder coating dispersion according to either of Claims 9 and 10 for coating a metal or plastic substrates.

## Revendications

1. Procédé de préparation d'une dispersion aqueuse de laque en poudre, **caractérisé en ce qu'**une masse fondue fluide contenant des liants et de l'agent de réticulation est introduite dans un dispositif d'émulsification avec ajout d'eau et d'agents stabilisants et l'émulsion obtenue est refroidie et filtrée, le temps de séjour depuis le commencement de la phase de mélange jusqu'à la fin de la phase de refroidissement étant de moins de 5 secondes et la masse fondue de liant et la masse fondue d'agent de réticulation étant réunies de telle manière qu'une réaction de réticulation soit exclue.

2. Procédé suivant la revendication 1, **caractérisé en ce que** des liants et des additifs, d'une part, ainsi que de l'agent de réticulation, d'autre part, sont fondus séparément et ensuite mélangés mutuellement, la dispersion étant finalement effectuée.

3. Procédé suivant la revendication 1 ou 2, **caractérisé en ce que** le rapport entre le liant et l'agent de réticulation dans la masse fondue est de 0,6/1 à 1/1,4.

4. Procédé suivant l'une des revendications 1 à 3, **caractérisé en ce que** le mélange est comprimé à des pressions de 100 à 1500 bars au travers de fines ouvertures.

5. Procédé suivant l'une des revendications 1 à 4, **caractérisé en ce que** les particules de l'émulsion sont, avant le refroidissement, fragmentées dans une étape supplémentaire du procédé.

6. Procédé suivant l'une des revendications 1 à 5, **caractérisé en ce que** le refroidissement est obtenu au moyen d'un échangeur de chaleur, par injection d'eau dans l'émulsion ou par atomisation de l'émulsion dans de l'eau.

7. Procédé suivant l'une des revendications 4 ou 5, **caractérisé en ce qu'**on met en oeuvre des appareils de dispersion à rotor-stator, ainsi que des moulins de colloïdes à dents ou des moulins à rotor par voie humide, des machines de dispersion à couronne dentée, des mélangeurs intensifs ou des homogénéisateurs sous haute pression.

8. Procédé suivant l'une des revendications 1 à 7, **caractérisé en ce que**, comme liant, on met en oeuvre des résines de polyacrylate, des résines de polyuréthanne et des résines d'aminoplaste ainsi que des époxyacrylates.

9. Dispersion aqueuse de laque en poudre, **caractérisée en ce qu'**elle peut être obtenue dans un procédé suivant l'une des revendications 1 à 7.

10. Dispersion aqueuse de laque en poudre suivant la revendication 9, **caractérisée en ce que** la taille moyenne des particules de la laque en poudre est de l'ordre de 100 à 10 000 nm et le poids moléculaire est compris entre 1000 et 20 000 g/mole.

11. Utilisation de la dispersion aqueuse de laque en poudre suivant l'une des revendications 9 ou 10, pour l'enduction de substrats en métal ou en matières plastiques.
